# FASCICULE DE BREVET EUROPEEN

(11) **EP 2 719 866 B1**
(45) Date de publication et mention de la délivrance du brevet: **05.12.2018**
(21) Numéro de dépôt: 12188423.3
(22) Date de dépôt: 12.10.2012
(51) Int. Cl.: F01D 5/30, F01D 5/32

(54) **Roue de turbomachine avec un verrou de blocage d'aubes**
Rotorscheibe einer Turbomaschine mit einem Verschlussstück für Laufradschaufeln
Rotor disk of a turbomachine comprising a lock for blades

(43) Date de publication de la demande: 16.04.2014
(73) Titulaire: Safran Aero Boosters SA, 4041 Herstal (BE)
(72) Inventeur: Remy, Christophe, 4347 Fexhe-Le-Haut-Clocher (BE)
(74) Mandataire: Lecomte & Partners

(56) Documents cités:
- EP-A- 1 314 856
- EP-A1- 1 801 355
- EP-A2- 2 333 243
- FR-A1- 2 973 067
- FR-A1- 2 973 068
- US-A- 3 216 700

## Description

### Domaine technique

L'invention a trait à une roue aubagée de turbomachine axiale. Plus particulièrement, l'invention a trait au problème de blocage ou calage d'aubes dans une rainure circonférentielle d'un rotor. Plus particulièrement encore, l'invention a trait à un verrou de blocage d'aubes dans une telle rainure.

### Technique antérieure

Le document de brevet EP 1 801 355 A1 montre un verrou de blocage d'aubes dans une rainure circonférentielle. La problématique abordée dans ce document est le positionnement d'un tel verrou notamment au niveau du ou des derniers étages du compresseur basse-pression d'un turboréacteur. En effet, en raison du profil incliné de cette partie du voile du tambour, l'axe de la vis est généralement incliné par rapport au plan moyen du verrou de manière à être généralement perpendiculaire à l'axe de rotation du tambour. Cette construction a pour effet que le verrou peut mal se positionner lors du serrage de la vis. La solution divulguée consiste essentiellement à prévoir une surface d'appui en rotation autour de laquelle le verrou peut pivoter dans un plan radial pour se positionner.

Le document de brevet FR 2 886 336 A1 a trait à un verrou de blocage d'aubes, similaire à celui du document précédent. Il aborde la problématique de tenue du verrou dans la gorge ou rainure circonférentielle d'un tambour de compresseur. Le verrou qui y est décrit comprend des surfaces d'appui avant et arrière avec des bossages respectifs destinés à empêcher un coulissement circonférentiel du verrou.

Le document GB 639,320 divulgue un verrou de blocage d'aubes dans une rainure circonférentielle d'un rotor de compresseur. Bien que le verrou présente deux vis réparties sur la longueur du verrou, ce document ne semble pas aborder la question de compensation des efforts de serrage de chacune des vis, ni la problématique d'encombrement.

Le document US 2011/0116933 A1 a trait également au blocage d'aubes dans une rainure circonférentielle de tambour de compresseur, au moyen de verrous. La particularité de cet enseignement réside en ce qu'un seul des deux rebords de la rainure présente des encoches. Le verrou présente par conséquent une forme adaptée, à savoir une forme arrondie du côté du rebord de rainure avec les encoches et une forme droite du côté opposé.

Les documents de brevet publiés FR 2 973 068 A1, FR 2 973 067 A1 et EP 1 314 856 A1 divulguent chacun une roue de turbomachine conforme au préambule de la revendication 1.

Dans certains des enseignements sus mentionnés, le verrou comporte une cheminée traversée par l'orifice d'insertion de la vis de serrage. Le bord supérieur de cette cheminée est calibré pour être aligné avec les surfaces extérieures des plateformes avoisinantes des aubes lorsque le verrou est en position. La cheminée permet ainsi de procéder à une vérification visuelle facile et fiable du positionnement correct du verrou lors du serrage.

### Résumé de l'invention

### Problème technique

Dans une logique de recherche de compacité et de diminution de poids d'une turbomachine, on peut être amené à réduire la largeur des rainures circonférentielles recevant les pieds d'aube. Dans ce cas, les verrous jusqu'alors utilisés ne peuvent plus être insérés dans les rainures. Pour des raisons mécaniques et de sécurité, un diamètre minimum de vis est imposé. Il est donc difficile de réduire la taille des verrous.

L'invention a pour objectif de proposer une solution permettant d'alléger et/ou de raccourcir le rotor aubagé d'une turbomachine axiale. Plus particulièrement, l'invention a pour objectif de proposer un verrou de taille plus compacte.

### Solution technique

L'invention a pour objet une roue de turbomachine, conforme à la revendication 1.

Selon un mode avantageux de l'invention, la portion supérieure est tronquée de manière à permettre une réduction de sa longueur suivant la largeur de la rainure, c'est-à-dire suivant une direction correspondant à la largeur de la rainure.

Selon un mode avantageux de l'invention, la portion supérieure est tronquée de manière à permettre une réduction de sa longueur suivant une direction correspondant généralement à la direction circonférentielle de la rainure. Plus particulièrement, la réduction de longueur est suivant une direction généralement perpendiculaire à la corde moyenne des aubes attenantes.

La section de la rainure peut avoir une forme d'alvéole.

La section de la portion supérieure du corps du verrou peut être circulaire, un polygone ou toute autre forme correspondant généralement à une portion d'anneau. Le fait qu'elle soit tronquée a pour conséquence que le profil de la section devient ouvert et non plus fermé. Il n'en reste pas moins que la forme générale initiale est toujours identifiable.

La direction longitudinale du verrou est comprise dans un plan radial du rotor lorsque le verrou est logé dans la rainure.

Selon un mode avantageux de l'invention, la portion supérieure tronquée du corps est tronquée au moins sur sa partie supérieure suivant un plan longitudinal de la rainure, et préférentiellement sur sa partie inférieure suivant une surface développable.

Selon un mode avantageux de l'invention, la portion supérieure tronquée du corps est tronquée sur une distance de sa section comprise entre ¼ et ½ de son diamètre extérieur moyen.

Selon un mode avantageux de l'invention, l'orifice comprend une portion filetée à distance du bord supérieur de la portion supérieure tronquée du corps de manière à permettre à la vis de serrage, lorsqu'elle est engagée dans le filetage, à avoir sa tête à un niveau inférieur audit bord supérieur.

Selon un mode avantageux de l'invention, le corps comprend au moins une surface de calage apte à coopérer avec une encoche correspondante sur une des faces opposées de la rainure.

Selon un mode avantageux de l'invention, le verrou comprend la vis de serrage coopérant avec un filetage dans l'orifice du corps, ladite vis ayant une tête de diamètre supérieur à la partie filetée de la vis, ladite vis et ledit filetage du corps étant configurés de manière à ce que la vis puisse prendre une position où sa tête est noyée dans la portion supérieure cylindrique à un niveau inférieur à celui du bord supérieur de la dite portion.

Selon un mode avantageux de l'invention, le corps comprend une portion massive, préférentiellement de section longitudinale en forme générale de T inversé, la portion supérieure tronquée du corps étant disposée directement sur ladite portion massive, la troncature étant limitée à la portion supérieure cylindrique.

Selon un mode avantageux de l'invention, le contour de l'orifice au niveau de la partie tronquée de la portion supérieure du corps correspond essentiellement au bord correspondant de la portion massive.

Selon un mode avantageux de l'invention, l'axe longitudinal de l'orifice est situé majoritairement d'un côté d'un plan médian transversal du corps.

Selon un mode avantageux de l'invention, la partie supérieure est tronquée sur deux côtés opposés.

Selon mode avantageux de l'invention, la portion supérieure tronquée du corps est tronquée au moins sur sa partie supérieure suivant un plan transversal à la rainure. Le plan transversal est préférentiellement incliné par rapport à un plan perpendiculaire à la rainure.

Selon un mode avantageux de l'invention, le profil des découpes des plateformes comprend une première portion circulaire sur plus de 90° et une deuxième portion droite généralement perpendiculaire au bord de la découpe.

Selon un mode avantageux de l'invention, l'axe longitudinal de l'orifice est essentiellement compris dans un plan médian des plateformes passant entre les bords adjacents.

L'invention a également pour objet un compresseur de turbomachine axiale, comprenant un tambour aubagé, remarquable en ce que le tambour comprend au moins une roue selon l'invention.

### Avantages apportés

Les mesures de l'invention permettent de diminuer la largeur de la rainure circonférentielle retenant les aubes sans diminuer le diamètre de la vis de serrage du verrou. Ce dernier peut être raccourci tout en gardant sa fonction de calage ainsi que sa fonction de visualisation de montage correct. La roue et la turbomachine résultante peuvent être ainsi réduits en longueur et en poids.

### Brève description des dessins

La figure 1 est une vue en coupe schématique d'une turbomachine axiale du type turboréacteur, comprenant un compresseur avec un rotor aubagé conforme à l'invention.
La figure 2 est une vue coupe d'une portion du compresseur basse-pression de la turbomachine de la figure 1, illustrant le rotor sous forme de tambour et la fixation des aubes dans des rainures circonférentielles.
La figure 3 est une vue en perspective d'un tronçon de tambour avec une rainure circonférentielle, apte à former une roue aubagée conforme à l'invention.
La figure 4 est une vue en perspective d'un verrou selon un premier mode de réalisation de l'invention, le verrou étant apte à être inséré dans la rainure de la figure 3.
La figure 5 est une vue en perspective d'une série d'aubes avec leurs plateformes, formant une rangée d'aubes de la roue selon le premier mode de réalisation de l'invention.
La figure 6 est une vue coupe selon l'axe 6-6 de la figure 5.
La figure 7 est une vue coupe selon l'axe 7-7 de la figure 5.
La figure 8 est une vue en plan d'une série d'aubes avec leurs plateformes, formant une rangée d'aubes de la roue selon un deuxième mode de réalisation de l'invention.

### Description des modes de réalisation

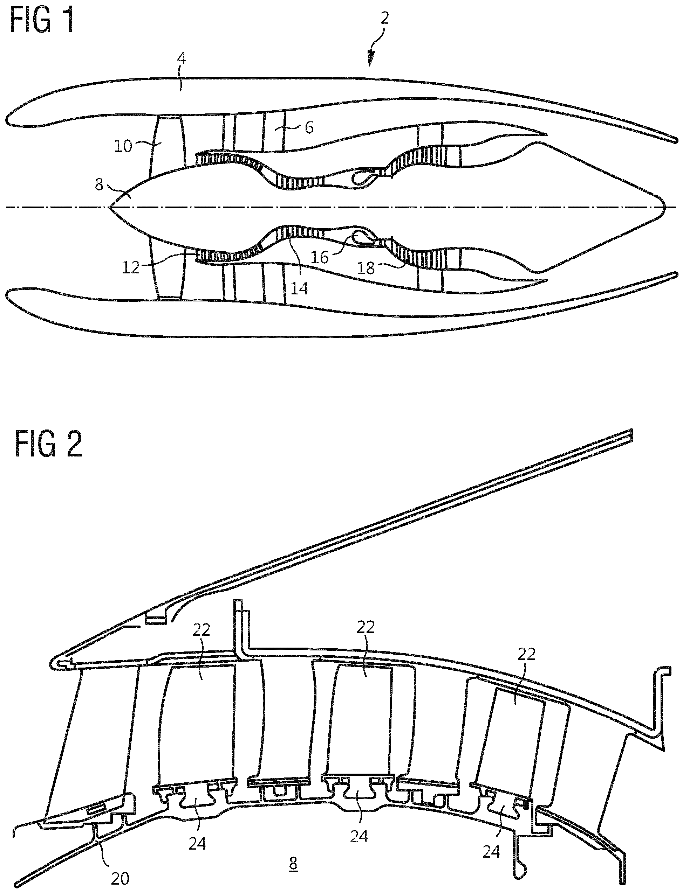

La figure 1 illustre un turboréacteur 2 comprenant essentiellement une nacelle de fixation 4 à une aile ou la carlingue d'un aéronef et une partie centrale logée dans la nacelle. Des bras de fixation 6 assurent la liaison entre la partie centrale et la nacelle. La partie centrale comprend essentiellement un rotor 8 supportant un ventilateur ou « fan » d'entrée 10, une série de rangées d'aubes formant les compresseurs basse-pression 12 et haute-pression 14. Une chambre de combustion 16 est disposée en aval du compresseur haute-pression 14, suivie d'une turbine 18. Cette architecture est bien connue en soi de l'homme de métier et ne sera pas davantage détaillée.

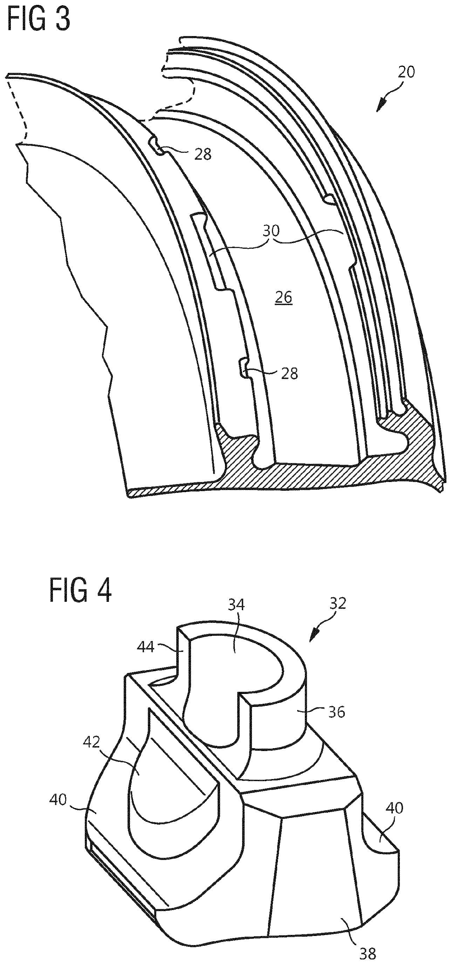

La figure 2, qui est une vue en coupe d'une portion du compresseur basse-pression de la turbomachine de la figure 1, illustre le rotor sous forme de tambour et la fixation des aubes rotoriques. On peut en effet constater que les aubes rotoriques 22 comprennent des pieds 24 logés dans des rainures circonférentielles respectives en vue de leur rétention sur le tambour. Ce type de montage va être davantage détaillé en relation avec la figure 3.

La figure 3 illustre une portion 20 de tambour d'un compresseur tel que celui des figures 1 et 2, montrant un segment d'une rainure de fixation d'une rangée d'aube. La rainure 26 est circonférentielle et ses bords opposés forment, chacun, une cavité apte à servir de surface de contact et de retenue des pieds d'aube. Chacun des bords comprend une encoche 30 d'insertion des pieds d'aube. Ces deux encoches sont en vis-à-vis et configurées pour permettre l'insertion successive de chacun des pieds d'aube. Plus particulièrement, chaque pied d'aube est inséré initialement par un mouvement essentiellement radial dirigé vers le fond de la rainure, suivi d'un mouvement de coulissement du pied le long de la rainure de manière à libérer l'espace d'insertion pour l'aube suivante, et ainsi de suite.

Un ou plusieurs verrous sont nécessaires pour assurer le blocage des aubes selon la direction circonférentielle de la rainure. A cet effet, au moins un des bords comprend au moins une encoche 28 destinée à coopérer avec un verrou logé dans la rainure entre deux pieds d'aube voisins. Préférentiellement et conformément à la figure 3, au moins un des bords comprend deux encoches 28 distantes l'une de l'autre de manière à coopérer avec deux verrous.

La figure 4 illustre un verrou conforme à l'invention destiné à être disposé dans la rainure 26 de la figure 3 et à coopérer avec une des encoches 28. Le corps 32 du verrou comprend essentiellement une portion massive 38 et une portion supérieure cylindrique 36. La portion massive 38 présente un profil en coupe longitudinale essentiellement en forme de T inversé. Elle comprend deux surfaces d'appui opposées 40 destinées à venir en appui radial avec les faces opposées et creuses de la rainure. Ces surfaces peuvent être symétriques ou asymétriques. Elles présentent, chacune, un profil courbe ou au moins partiellement rectiligne qui est incliné par rapport à la verticale, l'inclinaison étant destinée à permettre un engagement mécanique avec la surface correspondante des bords creux de la rainure. L'inclinaison moyenne peut être comprise entre 30° et 90°. Au moins une de ces surfaces peut également présenter une inclinaison moyenne de l'ordre de 90°, c'est-à-dire un profil essentiellement horizontal. Lorsque les surfaces d'appui opposées 40 sont asymétriques, elles peuvent présenter des inclinaisons différentes et/ou des longueurs différentes et/ou être implantées à des niveaux différentes par rapport au corps 32.

Au moins une des surfaces d'appui 40 peut comprendre un bossage 42 destiné à engager avec l'encoche ou une des encoches 28 de la rainure. Le bossage 42 peut prendre diverses formes mais est configuré pour assurer un calage du verrou, et partant des aubes, selon la direction circonférentielle de la rainure. En effet, le verrou est destiné à être disposé entre deux aubes lors de leur montage sur la rainure. Il est alors coulissé avec les aubes le long de la rainure jusqu'à ce toutes les aubes soient logées dans ladite rainure de manière à former une rangée complète. La rangée est déplacée par coulissement, préférentiellement aube par aube, jusqu'à ce que le verrou soit en face de son encoche. Une vis de serrage (non visible à la figure 4) traversant le corps du verrou 32 peut alors être serrée afin de venir en appui sur la fond de la rainure et faire monter le verrou jusqu'à engagement de sa surface de calage 42 avec l'encoche correspondante. La rangée d'aube est ainsi immobilisée. L'encoche de calage en question est disposée par rapport aux encoches d'insertion (30, figure 3) de manière à ce que les pieds d'aube les plus proches desdits encoches soient toutefois à distance d'elle de manière à ce qu'elles soient correctement ancrées dans la rainure. Il en résulte ainsi un montage adéquat des aubes sur le tambour ou rotor.

La portion supérieure cylindrique 36 du corps 32 du verrou est traversée par un orifice 34 traversant tout le corps et destiné à recevoir une vis de serrage du verrou dans la rainure. Comme cela est visible à la figure 4, la portion supérieure cylindrique 36 est tronquée suivant un profil généralement vertical, la troncature étant généralement transversale à l'axe longitudinal aligné avec les deux surfaces d'appui et pouvant correspondre à l'axe de rotation du rotor. En effet, la troncature 44 de la portion supérieure cylindrique 36 est configurée pour raccourcir la longueur de ladite portion suivant ladite direction longitudinale ou axiale. La partie supérieure de la zone tronquée 44 correspond à un plan transversal. La partie inférieure correspond à une surface générée par une droite se déplaçant de manière parallèle suivant un profil courbe. On peut observer que la frontière entre ladite zone tronquée 44 et l'orifice 34 forme un U dont la partie inférieure vient à proximité du bord supérieur correspondant de la portion massive 38 du corps 32. La partie supérieure de la portion massive du corps est ainsi de longueur réduite au maximum par rapport à la portion supérieure cylindrique tronquée.

La portion supérieure cylindrique tronquée 36 du corps 32 du verrou est destinée à affleurer avec les plateformes des aubes lorsque le verrou est en position d'appui avec la rainure et d'engagement avec la ou les encoches de calage. Son bord supérieur sert ainsi d'indicateur visuel de montage correct du verrou. Cette fonctionnalité va être décrite davantage en relation avec les figures restantes.

Il est toutefois à noter que la forme cylindrique de la portion supérieure tronquée n'est pas essentielle. En effet cette portion pourrait présenter d'autres formes comme par exemple une forme carrée ou rectangle, pour autant qu'elle puisse être traversée au moins partiellement par l'orifice de la vis et présenter une surface supérieure généralement plane, apte à affleurer avec les surfaces supérieures des plateformes des aubes voisines au verrou.

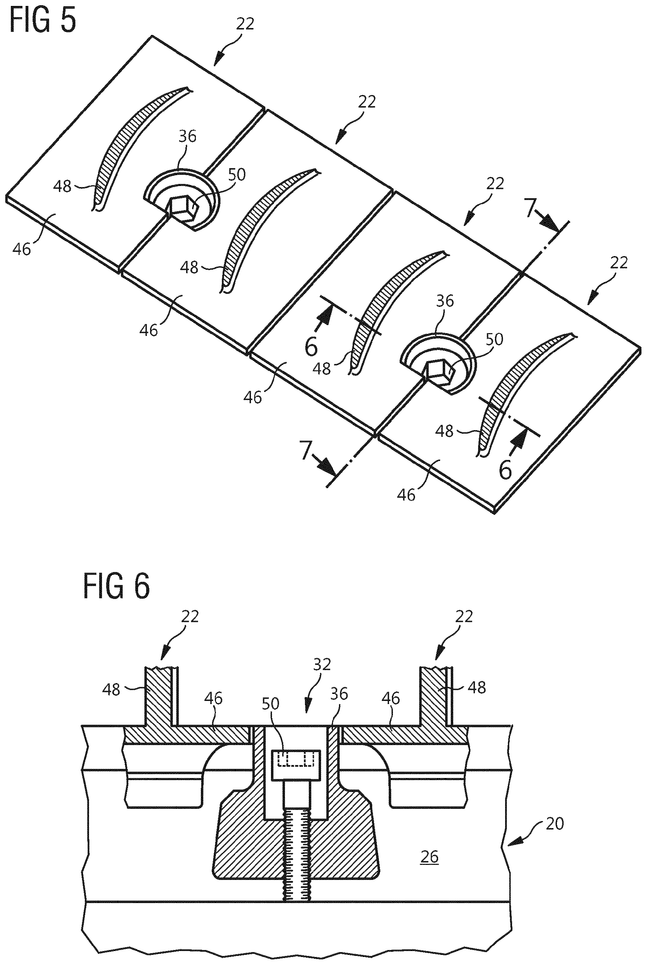

La figure 5 est une vue en perspective d'une portion d'une rangée d'aubes montées sur une rainure telle que celle de la figure 3, ladite portion comprenant deux verrous selon la figure 4. Les aubes 22 comprennent, chacune, une plateforme 46, ces plateformes, lorsqu'elles sont jointives ou quasi-jointives, forment une bande recouvrant la rainure et formant la surface intérieure délimitant la veine fluide du flux primaire traversant la turbomachine. Les parties aérodynamiques 48 des aubes 22 sont coupées à une hauteur proche des plateformes afin de bien faire apparaitre les éléments de l'invention. On peut observer la présence de deux portions supérieures tronquées 36, chacune desdites portions étant disposée entre deux plateformes d'aubes adjacentes. Il y a donc deux verrous sous cette rangée d'aubes. Les plateformes 46 en question présentent des découpes épousant la forme de ladite portion supérieure de visualisation des verrous. Plus précisément, dans le cas d'une portion supérieure cylindrique tronquée, chacune des plateformes 46 épousant ladite portion présente une découpe comprenant une première portion circulaire sur essentiellement 90°, voire jusqu'à 100° ou encore 110°, et une deuxième portion généralement rectiligne directement reliée à la première portion et généralement perpendiculaire au bord de la plateforme comprenant la découpe.

Toujours à la figure 5, on peut observer la tête de la vis de serrage 50 dans l'orifice formé dans la portion supérieure tronquée.

La figure 6 est une vue en coupe selon l'axe 6-6 de la figure 5. La portion supérieure cylindrique tronquée 36 forme une cheminée de visualisation de montage correct du verrou. En effet, son bord supérieur est essentiellement aligné avec les surfaces supérieures des plateformes 46 directement adjacentes. La tête de la vis 50 est à un niveau inférieur à celui de la surface inférieure desdites plateformes car la vis en question est située partiellement sur les plateformes, plus particulièrement au niveau du bord droit et perpendiculaire au bord de la découpe épousant la portion supérieure tronquée du corps du verrou. L'extrémité de la vis opposées à sa tête est en appui sur le fond de la rainure 26. La vis est engagée avec un filetage formé préférentiellement directement dans le corps 32 du verrou.

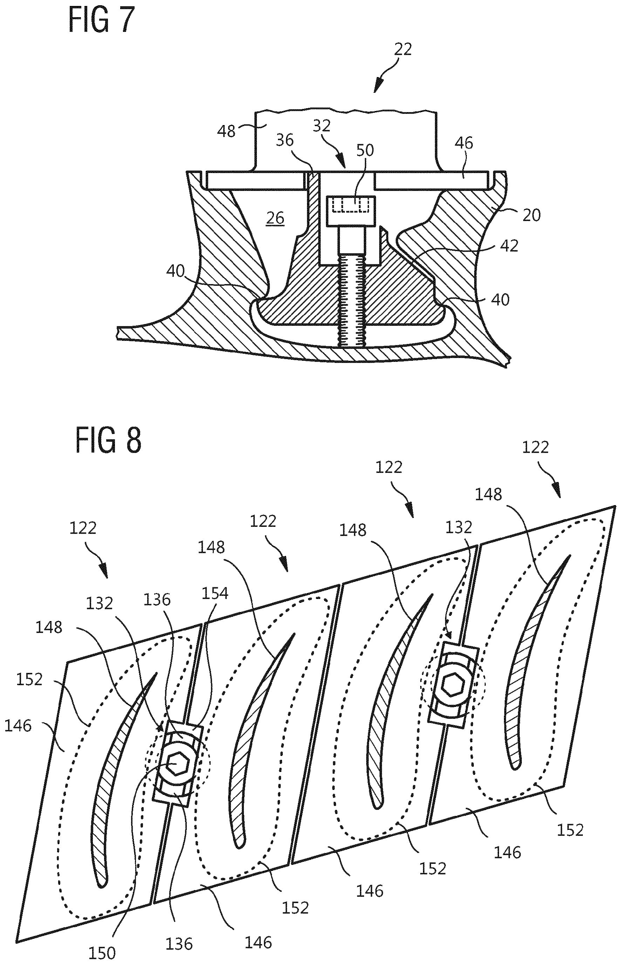

La figure 7 est une vue en coupe selon l'axe 7-7 de la figure 5. La troncature de la portion supérieure 36 du corps 32 du verrou y est bien visible. On peut également y observer que la vis 50 est partiellement sous les plateformes 46 (les parties de droite sur la figure), et ce en raison du fait que la portion supérieure du corps est tronquée. L'accès à la tête de vis depuis l'extérieur est toujours assuré. La partie non tronquée (à gauche sur la figure) de la portion supérieure 36 permet de procéder à une vérification visuelle fiable du bon montage du verrou.

Dans la description qui a été faite ci-avant, l'orifice et la vis ont leur axe essentiellement vertical et orienté suivant un rayon de la roue sur laquelle le verrou est monté. Or cet axe peut en pratique être légèrement incliné par rapport à cette direction, notamment en raison de sa position asymétrique dans un plan longitudinal. En effet, le fait de tronquer la portion supérieure du corps du verrou et par là de réduire sa longueur, a pour conséquence que l'épaisseur de matière au bord de ladite portion au niveau du point bas de la zone tronquée (44, figure 4) est sensiblement inférieure à celle de la zone opposée.

La figure 8 représente une vue en plan d'une portion d'une rangée d'aubes montées avec des verrous selon un deuxième mode de réalisation de l'invention sur une rainure telle que celle de la figure 3. Cette figure 8 reprend la numérotation des figures précédentes pour les éléments identiques ou similaires, la numération étant toutefois incrémentée de 100. Des numéros spécifiques sont utilisés pour les éléments spécifiques à ce mode de réalisation.

Les aubes rotoriques 122 comprennent une partie aérodynamique 148 dont la corde présente un angle prononcé par rapport au flux. Cet angle est supérieur à 5°, préférentiellement supérieur à 15°, encore plus préférentiellement supérieur à 30°. Les aubes 122 comprennent des plateformes 146 en forme de parallélogramme pour y faciliter l'implantation des parties aérodynamiques 148. Pour des considérations de résistance mécanique, un périmètre 152 défini sur les plateformes 146 est associé à chaque partie aérodynamique 148 des aubes. Il doit être préservé afin de garantir une bonne jonction entre la partie aérodynamique 148 de l'aube et la gorge.

Les deux verrous 132 sont similaires à celui présenté en figure 4, ils s'en distinguent toutefois en ce que la portion supérieure cylindrique tronquée comprend deux troncatures opposées par rapport à l'axe du cylindre. Préférentiellement, les troncatures sont réalisées suivant des plans de troncature essentiellement parallèles, inclinés par rapport à la direction circonférentielle de la rainure vue du dessus. Les plans de troncature sont essentiellement parallèles aux grands côtés des parallélogrammes que forment les plateformes 146.

Les portions supérieures cylindriques tronquées visibles comprennent chacune deux arcs 136 logés dans des ouvertures 154 délimitées par des redans formés dans les bords des plateformes 146 des aubes 122. Les ouvertures 154 sont essentiellement rectangulaires et alignées sur les parallélogrammes. Leurs largeurs permettent une manipulation des vis de serrage 150. Suivant un mode avantageux de l'invention, les surfaces supérieures des arcs 136 sont affleurantes aux surfaces supérieures des plateformes 146, et sensiblement en retrait, par exemple de moins de 0,10 mm. De la sorte, les surfaces supérieures des arcs 136 peuvent servir de repère permettant de contrôler visuellement le bon positionnement des verrous, et en particulier de contrôler leur hauteur dans la gorge.

Les deux troncatures offrent l'avantage de respecter les périmètres 152 des aubes 122 sans être contraint d'écarter les partie aérodynamique 148 les unes des autres tout en pouvant insérer un verrou entre les plateformes 146.

## Revendications

1. Roue de turbomachine axiale (2, 12), comprenant :
- un rotor (20) avec au moins une rainure circonférentielle (26) dont les faces opposées ont, chacune, un profil creux ;
- des aubes (22) dont les pieds sont logés dans, et en prise mécanique avec, la rainure (26) ;
- au moins un verrou logé dans la rainure (26) entre les pieds de deux aubes voisines (22), empêchant le coulissement des aubes le long de la rainure, le verrou comprenant un corps (32) avec :
∘ deux surfaces d'appui opposées (40) en appui radial avec les faces opposées et creuses de la rainure ;
∘ un orifice (34) traversant disposé entre les deux surfaces d'appui (40), s'étendant suivant un axe et recevant une vis de serrage (50) en appui sur le fond de la rainure ;
∘ une portion supérieure (36), préférentiellement cylindrique, traversée par l'orifice, la portion supérieure (36) étant tronquée (44) de manière à permettre une réduction de sa longueur dans un plan généralement perpendiculaire à l'axe de l'orifice ;
**caractérisée en ce que**
les deux aubes voisines de part et d'autre du verrou comprennent chacune, une plateforme (46) avec, au niveau de leurs bords adjacents, une découpe épousant le contour de la moitié correspondante de la portion supérieure tronquée (36) du corps (32) du verrou ; et
une portion de la tête de la vis (50) est cachée sous les deux plateformes adjacentes (46).

2. Roue selon la revendication 1, **caractérisée en ce que** la portion supérieure est tronquée de manière à permettre une réduction de sa longueur suivant la largeur de la rainure et/ou suivant une direction correspondant généralement à la direction circonférentielle de la rainure.

3. Roue selon l'une des revendications 1 et 2, **caractérisée en ce que** la portion supérieure tronquée (36) du corps (32) est tronquée au moins sur sa partie supérieure suivant un plan longitudinal de la rainure, et préférentiellement sur sa partie inférieure suivant une surface développable.

4. Roue selon l'une des revendications 1 à 3, **caractérisée en ce que** la portion supérieure tronquée (36) du corps (32) est tronquée sur une portion de sa section comprise entre ¼ et ½ de son diamètre extérieur.

5. Roue selon l'une des revendications 1 à 4, **caractérisée en ce que** l'orifice (34) comprend une portion filetée à distance du bord supérieur de la portion supérieure tronquée (36) du corps (32) de manière à permettre à la vis de serrage (50), lorsqu'elle est engagée dans le filetage, à avoir sa tête à un niveau inférieur audit bord supérieur.

6. Roue selon l'une des revendications 1 à 5, **caractérisée en ce que** le corps (32) comprend au moins une surface de calage (42) apte à coopérer avec une encoche correspondante (28) sur une des faces opposées de la rainure (26).

7. Roue selon l'une des revendications 1 à 6, **caractérisée en ce que** la vis de serrage (50) coopère avec un filetage dans l'orifice (34) du corps (32), ladite vis (50) ayant une tête de diamètre supérieur à la partie filetée de la vis, ladite vis et ledit filetage du corps étant configurés de manière à ce que la vis puisse prendre une position où sa tête est noyée dans la portion supérieure (36) du corps (32) à un niveau inférieur à celui du bord supérieur de la dite portion.

8. Roue selon l'une des revendications 1 à 7, **caractérisée en ce que** le corps (32) comprend une portion massive (38), préférentiellement de section longitudinale en forme générale de T inversé, la portion supérieure tronquée (36) du corps (32) étant disposée directement sur ladite portion massive (38), la troncature (44) étant limitée à la portion supérieure (36).

9. Roue selon la revendication 8, **caractérisé en ce que** le contour de l'orifice (34) au niveau de la partie tronquée (44) de la portion supérieure (36) du corps (32) correspond essentiellement au bord correspondant de la portion massive (38).

10. Roue selon l'une des revendications 1 à 9, **caractérisée en ce que** l'axe longitudinal de l'orifice (34) est situé d'un côté d'un plan médian transversal du corps.

11. Roue selon l'une des revendications 1 à 10, **caractérisée en ce que** le profil des découpes des plateformes (46) comprend une première portion circulaire sur plus de 90° et une deuxième portion droite généralement perpendiculaire au bord de la découpe.

12. Roue selon l'une des revendications 1 à 11, **caractérisée en ce que** l'axe longitudinal de l'orifice (34) est essentiellement compris dans un plan médian des plateformes (46) passant entre les bords adjacents.

## Patentansprüche

1. Laufrad einer axialen Turbomaschine (2; 12), umfassend:
- einen Rotor (20) mit mindestens einer umfangsgerichteten Nut (26) mit einander gegenüberliegenden Seiten, die jede ein hohles Profil aufweisen;
- Schaufeln (22), deren Füße sich in, und in mechanischem Eingriff mit, der Nut (26) befinden;
- mindestens einer Sperre, die in der Nut (26) zwischen den Füßen zweier benachbarter Schaufeln (22) montiert ist und das Verschieben der Schaufeln entlang der Nut verhindert, wobei die Sperre einen Körper (32) umfasst mit:
∘ zwei gegenüberliegenden Auflageflächen (40), die radial auf den einander gegenüberliegenden hohlen Seiten der Nut aufliegen;
∘ einem Durchgangsloch (34) zwischen den zwei Auflageflächen (40), das sich entlang einer Achse erstreckt und eine auf dem Boden der Nut aufliegende Klemmschraube (50) aufnimmt;
∘ einem oberen Teil (36), bevorzugt zylindrisch, der von dem Loch durchquert wird, wobei der obere Teil (36) abgeschnitten ist, um eine Reduzierung seiner Länge in einer Ebene generell senkrecht zur Achse des Lochs zu gestatten;
**dadurch gekennzeichnet, dass**
die zwei benachbarten Schaufeln zu beiden Seiten der Sperre jede eine Plattform (46) umfassen, die an ihren benachbarten Rändern einen Ausschnitt aufweist, der mit der Kontur der entsprechenden Hälfte des abgeschnittenen oberen Teils (36) des Körpers (32) der Sperre übereinstimmt; und
ein Teil des Kopfs der Schraube (50) unter den zwei benachbarten Plattformen (46) verborgen ist.

2. Laufrad nach Anspruch 1, **dadurch gekennzeichnet, dass** der obere Teil abgeschnitten ist, um eine Reduktion seiner Länge entlang der Breite der Nut und/oder in einer im Wesentlichen der Umfangsrichtung der Nut entsprechenden Richtung zu gestatten.

3. Laufrad nach einem der Ansprüche 1 und 2, **dadurch gekennzeichnet, dass** der obere, abgeschnittene Teil (36) des Körpers (32) mindestens an seinem oberen Teil entlang einer Längsebene der Nut, und bevorzugt an seinem unteren Teil, einer entwickelbaren Fläche folgend, abgeschnitten ist.

4. Laufrad nach einem der Ansprüche 1 bis 3, **dadurch gekennzeichnet, dass** der obere, abgeschnittene Teil (36) des Körpers (32) an einem Teil seines Querschnitts zwischen ¼ und ½ seines Außendurchmessers abgeschnitten ist.

5. Laufrad nach einem der Ansprüche 1 bis 4, **dadurch gekennzeichnet, dass** das Loch (34) einen Gewindeteil in einem Abstand von der Oberkante des oberen, abgeschnittenen Teils (36) des Körpers (32) umfasst, um zu gestatten, dass sich der Kopf der Klemmschraube (50), wenn diese in dem Gewinde in Eingriff ist, auf einer Höhe unter der besagten Oberkante befindet.

6. Laufrad nach einem der Ansprüche 1 bis 5, **dadurch gekennzeichnet, dass** der Körper (32) mindestens eine keilförmige Fläche (42) aufweist, die dafür ausgelegt ist, mit einer entsprechenden Aussparung (28) an einer der einander gegenüberliegenden Seiten der Nut (26) zusammenzuwirken.

7. Laufrad nach einem der Ansprüche 1 bis 6, **dadurch gekennzeichnet, dass** die Klemmschraube (50) mit einem Gewinde in dem Loch (34) des Körpers (32) zusammenwirkt, wobei besagte Schraube (50) einen Kopf mit einem Durchmesser, der größer als der Gewindeteil der Schraube ist, aufweist, wobei besagte Schraube und besagtes Gewinde des Körpers so ausgeführt sind, dass die Schraube eine Position einnehmen kann, worin ihr Kopf in dem oberen Teil (36) des Körpers (32) auf einer Höhe unter derjenigen der Oberkante des besagten Teils eingebettet ist.

8. Laufrad nach einem der Ansprüche 1 bis 7, **dadurch gekennzeichnet, dass** der Körper (32) einen massiven Teil (38), bevorzugt mit einem Längsschnitt in der allgemeinen Form eines umgekehrten T, aufweist, wobei der abgeschnittene obere Teil (36) des Körpers (32) direkt an dem besagten massiven Teil (38) angebracht ist, wobei die Abschneidung (44) auf den oberen Teil (36) begrenzt ist.

9. Laufrad nach Anspruch 8, **dadurch gekennzeichnet, dass** die Form des Lochs (34) an dem abgeschnittenen Teil (44) des oberen Teils (36) des Körpers (32) im Wesentlichen dieselbe ist wie die des entsprechenden Randes des massiven Teils (38).

10. Laufrad nach einem der Ansprüche 1 bis 9, **dadurch gekennzeichnet, dass** die Längsachse des Lochs (34) sich an einer Seite einer Quermittelebene des Körpers befindet.

11. Laufrad nach einem der Ansprüche 1 bis 10, **dadurch gekennzeichnet, dass** das Profil der Ausschnitte an den Plattformen (46) einen ersten kreisförmigen Teil von mehr als 90° und einen zweiten geraden Teil generell senkrecht zum Rand des Ausschnitts beinhaltet

12. Laufrad nach einem der Ansprüche 1 bis 11, **dadurch gekennzeichnet, dass** die Längsachse des Lochs (34) im Wesentlichen in einer sich zwischen den benachbarten Rändern erstreckenden Mittelebene der Plattformen (46) enthalten ist.

## Claims

1. Axial turbomachine wheel (2,12), comprising:
- a rotor (20) with at least one circumferential groove (26) having opposed faces each having a hollow profile;
- blades (22) whose roots are located in, and in mechanical engagement with, the groove (26);
- at least one lock mounted in the groove (26) between the roots of two adjacent blades (22) preventing the blades sliding along the groove, the lock comprising a body (32) with:
∘ two opposed bearing surfaces (40) bearing radially onto the opposite hollow faces of the groove;
∘ a through hole (34) between the two bearing surfaces (40) extending along an axis and housing a clamping screw (50) bearing on the bottom of the groove;
∘ an upper part (36), preferably cylindrical, pierced by the hole, the upper part (36) being truncated (44) so as to allow a reduction in its length in a plane generally perpendicular to the axis of the hole ;
**characterized in that**
the two adjacent blades on either side of the lock each comprise a platform (46) that has on its adjacent edges a cut-out that matches the contour of the corresponding half of the truncated upper part (36) of the body (32) of the lock; and
a part of the head of the screw (50) is hidden beneath the two adjacent platforms (46).

2. Wheel in accordance with Claim 1, **characterized in that** the upper portion is truncated so as to allow a reduction of its length along the width of the groove and/or in a direction corresponding essentially to the circumferential direction of the groove.

3. Wheel in accordance with one of Claims 1 and 2, **characterized in that** the upper truncated portion (36) of the body (32) is truncated at least on its upper part along a longitudinal plane of the groove, and preferably on its lower part following a developable surface.

4. Wheel in accordance with one of Claims 1 to 3, **characterized in that** the upper truncated portion (36) of the body (32) is truncated on a part of its section between ¼ and ½ of its outside diameter.

5. Wheel in accordance with one of Claims 1 to 4, **characterized in that** the hole (34) comprises a threaded portion at a distance from the upper edge of the upper truncated portion (36) of the body (32) so as to allow the clamping screw (50), when it is engaged in the thread, to have its head at a level below the said upper edge.

6. Wheel in accordance with one of Claims 1 to 5, **characterized in that** the body (32) comprises at least one wedge-shaped surface (42) designed to mate with a corresponding slot (28) on one of opposite sides of the groove (26).

7. Wheel in accordance with one of Claims 1 to 6, **characterized in that** the clamping screw (50) mates with a thread in the hole (34) of the body (32), the said screw (50) having a head with a diameter larger than the threaded portion of the screw, the said screw and the said thread of the body being made such that the screw can take a position where its head is embedded in the upper portion (36) of the body (32) to a level beneath that of the upper edge of the said part.

8. Wheel in accordance with one of Claims 1 to 7, **characterized in that** the body (32) comprises a solid part (38), preferably with a longitudinal section in the general shape of an inverted T, the truncated upper part (36) of the body (32) being attached directly to the said solid part (38), the truncation (44) being limited to the upper part (36).

9. Wheel in accordance with claim 8, **characterized in that** the shape of the hole (34) at the truncated part (44) of the upper part (36) of the body (32) is essentially the same as the corresponding edge of the solid portion (38).

10. Wheel in accordance with one of Claims 1 to 9, **characterized in that** the longitudinal axis of the hole (34) is located on one side of a transverse median plane of the body.

11. Wheel in accordance with one of Claims 1 to 10, **characterized in that** the profile of the cut-outs on the platforms (46) includes a first circular part of more than 90° and a second straight part generally perpendicular to the edge of the cut-out.

12. Wheel in accordance with one of Claims 1 to 11, **characterized in that** the longitudinal axis of the hole (34) is substantially included in a median plane of the platforms (46) extending between the adjacent edges.
